# EUROPEAN PATENT APPLICATION

(11) **EP 4 052 940 A1**
(43) Date of publication of application: **07.09.2022**
(21) Application number: 20882597.6
(22) Date of filing: 10.10.2020
(51) Int. Cl.: B60H 1/34

(54) **AIR OUTLET**

(30) Priority: 31.10.2019 CN 201911054614; 31.10.2019 CN 201921859026 U
(71) Applicant: Shanghai Yanfeng Jinqiao Automotive Trim Systems Co., Ltd., Shanghai 201206 (CN)
(72) Inventor: TANG, Yucheng, Shanghai 201206 (CN)
(74) Representative: Trinks, Ole
(86) International application number: PCT/CN2020/120210
(87) International publication number: WO 2021/082887

(57) **Abstract**

The invention relates to an air outlet comprising a housing, wherein an air guide block is assembled inside the housing, the air guide block is provided with a well, and at least one set of air guide blades are accommodated in the well to enable the air guide block to longitudinally move relative to the air guide blades. The air outlet of the invention is slender, which meets the requirement of conciseness of the inner decoration styling and also guarantees the effective air outlet area and good guidance.

## Description

### Technical Field

The invention relates to the field of vehicle interior trim parts, in particular to an air outlet.

### Background Art

In order to regulate the temperature of the environment in the vehicle, an air conditioner air outlet is usually arranged on an instrument panel or an auxiliary instrument panel of the vehicle. With the conciseness of the inner decoration styling, the slenderness requirements for the outer opening of the air outlet become more and more popular.

According to the conventional air outlet, the upper and lower directions and the left and right directions of the air outlet are respectively controlled by front and rear rows of blades. However, when the air outlet opening is slender and horizontal blades are used for guiding the air up and down, the effective area of the air outlet is greatly reduced due to the influence of the thickness of the blades, and the directivity of the air outlet is also influenced.

### Summary of the Invention

The invention provides an air outlet in order to solve the problems that the arrangement space of blades of a slender air outlet is limited and the effective air outlet area and the guidance range are influenced in the prior art.

According to the air outlet provided by the invention, movable air guide blocks replace the blades to conduct upper and lower air guide to increase the effective air outlet area, while the requirement on conciseness of the inner decoration styling is met. Furthermore, ribs are arranged on the blades for controlling left and right wind guidance, so that good guidance is guaranteed.

### Brief Description of the Drawings

FIGURE 1 is a structural assembly schematic diagram of an air outlet according to Embodiment 1 of the invention.
FIGURE 2 is a structural exploded view of an air outlet according to Embodiment 1 of the invention.
FIGURE 3A is a schematic view showing an external effect of moving an air guide block of an air outlet to an upper limit position according to Embodiment 1 of the invention.
FIGURE 3B is a schematic view showing an external effect of moving the air guide block of the air outlet to an intermediate position according to Embodiment 1 of the invention.
FIGURE 3C is a schematic view showing an external effect of moving the air guide block of the air outlet to a lower limit position according to Embodiment 1 of the invention.
FIGURE 4A is a schematic view showing an internal structure of an air outlet according to Embodiment 1 of the invention when an air guide blade set is moved to a right limit position, in which an upper housing is hidden.
FIGURE 4B is a schematic view showing the internal structure of the air outlet according to Embodiment 1 of the invention when the air guide blade set is moved to a left limit position, in which the upper housing is hidden.
FIGURE 4C is a schematic view showing the internal structure of the air outlet according to Embodiment 1 of the invention when the air guide block is moved to an upper limit position, in which the lower housing is hidden.
FIGURE 4D is a schematic view showing the internal structure of the air outlet according to Embodiment 1 of the invention when the air guide block is moved to a lower limit position, in which the upper housing is hidden.
FIGURE 5A is a schematic view showing an assembly manner of an air guide block and an air guide blade set of an air outlet according to Embodiment 1 of the invention.
FIGURE 5B is an assembly view of the air guide block and the air guide blade set of the air outlet according to Embodiment 1 of the invention.
FIGURE 6 is a structurally schematic view of an air guide blade set according to Embodiment 1 of the invention.
FIGURE 7 is a structurally schematic view of a single air guide blade according to Embodiment 1 of the invention.
FIGURE 8A is a sectional view showing the movement of an air guide block of an air outlet to an upper limit position according to Embodiment 1 of the invention.
FIGURE 8B is a sectional view showing the movement of the air guide block of the air outlet to an intermediate position according to Embodiment 1 of the invention.
FIGURE 8C is a sectional view showing the movement of the air guide block of the air outlet to a lower limit position according to Embodiment 1 of the invention.
FIGURE 9A is a sectional view showing the movement of an air guide blade set of an air outlet to a right limit position according to Embodiment 1 of the invention.
FIGURE 9B is a sectional view showing the movement of the air guide blade set of the air outlet to an intermediate position according to Embodiment 1 of the invention.
FIGURE 9C is a sectional view showing the movement of the air guide blade set of the air outlet to a left limit position according to Embodiment 1 of the invention.
FIGURE 10 is a view showing an upward and rightward blowing state in which an air guide block of an air outlet moves to an upper limit position while an air guide blade set moves to a right limit position according to Embodiment 1 of the invention.
FIGURE 11 is a structural assembly view of an air outlet according to Embodiment 2 of the invention.
FIGURE 12 is a structural exploded view of an air outlet according to Embodiment 2 of the invention.
FIGURE 13A is a schematic view showing an external effect of moving an air guide block of an air outlet to an upper limit position according to Embodiment 2 of the invention.
FIGURE 13B is a schematic view showing an external effect of moving the air guide block of the air outlet to an intermediate position according to Embodiment 2 of the invention.
FIGURE 13C is a schematic view showing an external effect of moving the air guide block of the air outlet to a lower limit position according to Embodiment 2 of the invention.
FIGURE 14A is a schematic view showing an internal structure of an air outlet according to Embodiment 2 of the invention when an air guide blade string is moved to a right limit position, in which an upper housing is hidden.
FIGURE 14B is a schematic view showing the internal structure of the air outlet according to Embodiment 2 of the invention when the air guide blade string is moved to a left limit position, in which the upper housing is hidden.
FIGURE 14C is a schematic view showing the internal structure of the air outlet according to Embodiment 2 of the invention when an air guide block is moved to an upper limit position, in which a lower housing is hidden.
FIGURE 14D is a schematic view showing the internal structure of the air outlet according to Embodiment 2 of the invention when the air guide block is moved to a lower limit position, in which the upper housing is hidden.
FIGURE 15 is an assembly view of an air guide block and an air guide blade string of an air outlet according to Embodiment 2 of the invention.
FIGURE 16 is an exploded view of an air guide block and an air guide blade string of an air outlet according to Embodiment 2 of the invention.
FIGURE 17 is a schematic view showing an assembly manner of an air guide block and an air guide blade string of an air outlet according to Embodiment 2 of the invention.
FIGURE 18A is a sectional view showing the movement of an air guide block of an air outlet to an upper limit position according to Embodiment 2 of the invention.
FIGURE 18B is a sectional view showing the movement of the air guide block of the air outlet to an intermediate position according to Embodiment 2 of the invention.
FIGURE 18C is a sectional view showing the movement of the air guide block of the air outlet to the lower limit position according to Embodiment 2 of the invention.
FIGURE 19A is a sectional view showing the movement of an air guide blade string of an air outlet to a right limit position according to Embodiment 2 of the invention.
FIGURE 19B is a sectional view showing the movement of the air guide blade string of the air outlet to an intermediate position according to Embodiment 2 of the invention.
FIGURE 19C is a sectional view showing the movement of the air guide blade string of the air outlet to a left limit position according to Embodiment 2 of the invention.
FIGURE 20 is a sectional view showing an air outlet according to Embodiment 2 of the invention blowing upward and rightward.

### Detailed Description of the Invention

The invention is further described below with reference to the accompanying drawings and embodiments. It should be understood that the following embodiments are intended to illustrate and not limit the invention.

### 1. Embodiment 1

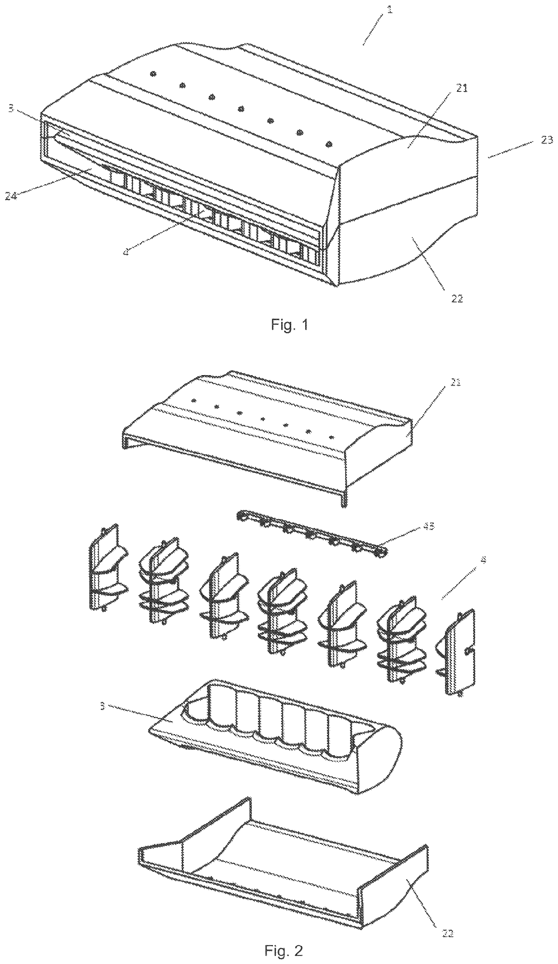

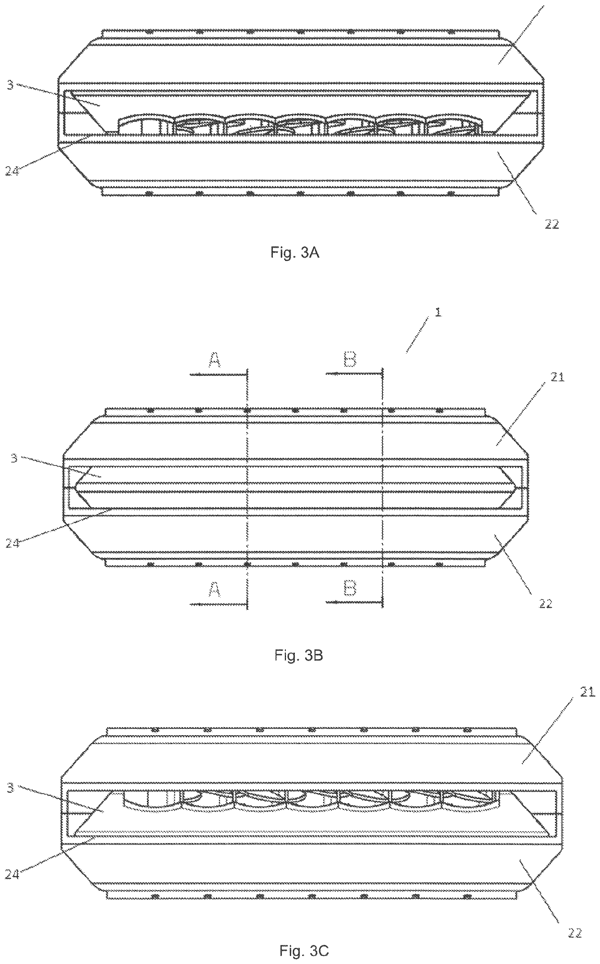

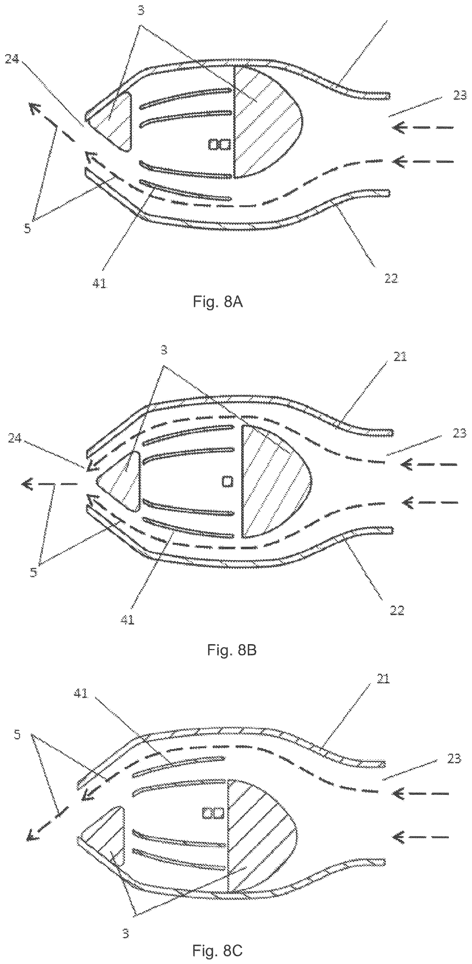

An air outlet according to the invention is shown in FIGURES 1-2. The air outlet 1 comprises an upper housing 21, a lower housing 22, an air guide block 3 and an air guide blade set 4. After the upper housing 21 and the lower housing 22 are combined, slender rectangular notches are reserved on both sides, one side is an air inlet side 23, and the other side is an air outlet side 24. The air guide block 3 and the air guide blade set 4 are assembled inside the housing, and the air guide block 3 divides the cavity of the housing into an upper part and a lower part. As shown in FIGURES 3A-3C and 8A-8C, when the air guide block 3 moves up and down, the ratio of the upper part and the lower part of the housing cavity can be changed to adjust the air blowing of the air outlet 1 in the up and down directions.

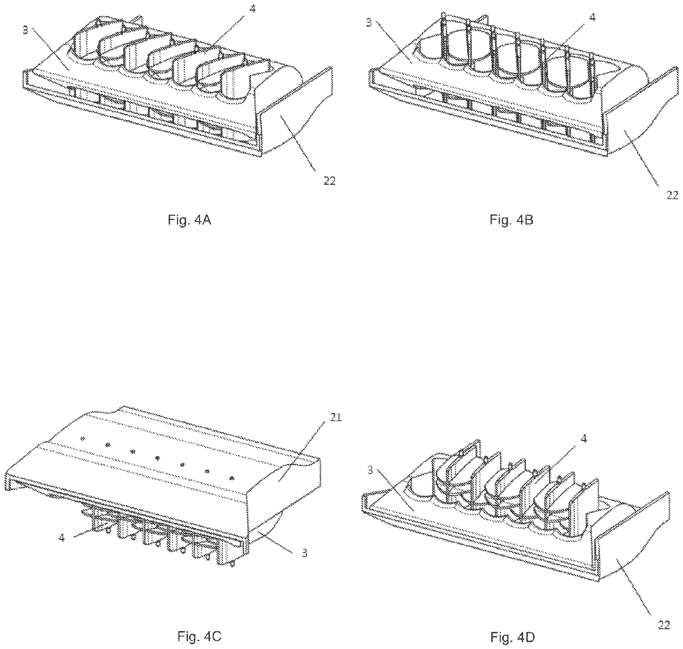

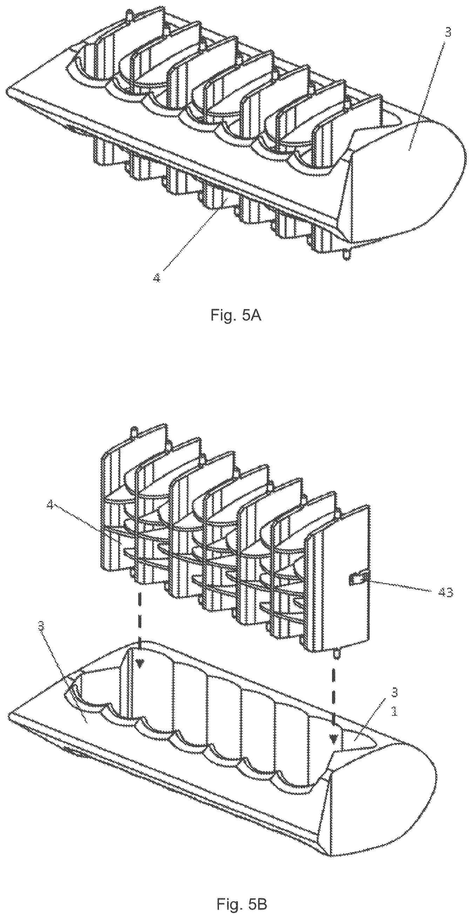

As shown in FIGURE 5A, the air guide block 3 has a well 31 extending along the outline of the air guide blades, and the air guide blade set 4 penetrates through the inside of the well 31 and can rotate left and right in the well 31 to regulate air blowing in the left and right directions of the air outlet 1, as shown in FIGURES 4A-4B. The sides of the opening of the well 31 comprise a plurality of continuous curved surfaces 32, the shape of which substantially coincides with the shape of the envelope surface of motion of the blade, since the well is arranged to avoid the envelope surface of motion of the blade. The number of the curved surfaces is consistent with the number of the air guide blades, and two ends of each curved surface correspond to the limit rotation position of each air guide blade.

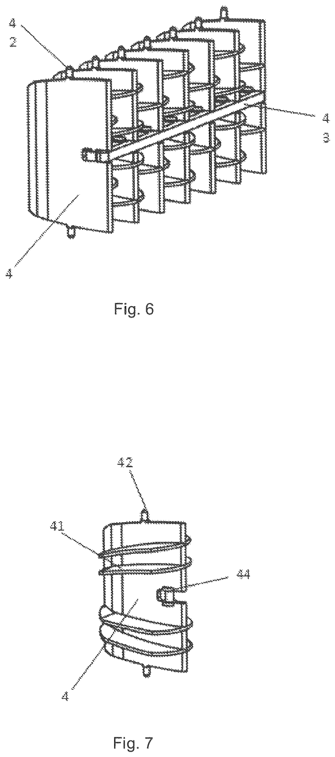

As shown in FIGURES 6 and 7, the blades in the air guide blade set 4 are provided with a plurality of ribs 41 with different heights, and the ribs 41 are used for filling gaps between the air guide blades and between the air guide blade set 4 and the air guide block 3, so that the air passage in the housing is smoother. The outer profile of the ribs 41 is identical to the outer profile of the outer surface of the air guide block at the same side, the ribs on adjacent blades are interleaved, and the ribs at the same height are arranged in a set. At least one set of ribs is substantially aligned with the upper or lower surface at periphery of an opening of the well 31 of the air guide block 3 when the air guide blocks 3 are at different heights.

The air guide blade is further provided with a blade rotating shaft 42 extending in a vertical direction and a blade linkage rotating shaft 44, wherein a single blade can rotate around the blade rotating shaft 42, and a plurality of blades form an air guide blade set 4 by blade linkages 43 connected with the blade linkage rotating shaft 44.

When the air outlet 1 blows in the forward direction, as shown in FIGURE 8B, the air guide block 3 is positioned in the middle of the housing, and the housing cavity is divided into two parts which are equal in a vertical direction by the air guide block 3. After air flow 5 enters the housing from an air inlet side 23 of the housing, the air flow 5 is equally divided in the vertical direction by the air guide block 3, converges at the air outlet side 24 of the housing after passing through the air guide block 3 and the air guide blade set 4, and the air flow 5 blows out at the air outlet side 24 of the housing in the horizontal direction due to the equal air flow on the upper side and the lower side. The rib 41 fills the notch in the middle of the air guide block 3, so that the air passage in the housing is smooth.

When the air outlet 1 blows upward, as shown in FIGURE 8A, the air guide block 3 is located at the upper portion of the housing, the inner wall of the lower housing 22 and the air guide block 3 together form an upward outlet at the air outlet side 24 of the housing, and the air flow 5 is located at the lower portion of the air guide block 3 and blows out from the air outlet side 24 of the housing in an upward direction. When the air guide block 3 is tightly attached to the inner wall of the upper housing 21, the upper portion of the housing cavity is completely closed, the upward blowing angle reaches a limit value, and the air outlet area is effectively increased.

When the air outlet 1 blows downwards, its principle is the same as that of blowing upwards. As shown in FIGURE 8C, the air guide block 3 is located at the lower portion of the housing, the inner wall of the upper housing 21 and the air guide block 3 together form a downward outlet at the outlet side 24 of the housing, and the air flow 5 is located at the upper portion of the air guide block 3 and blows out from the outlet side 24 of the housing in a downward direction. When the air guide block 3 is tightly attached to the inner wall of the lower housing 22, the lower portion of the housing cavity is completely closed, the downward blowing angle reaches a limit value, and the air outlet area is effectively increased.

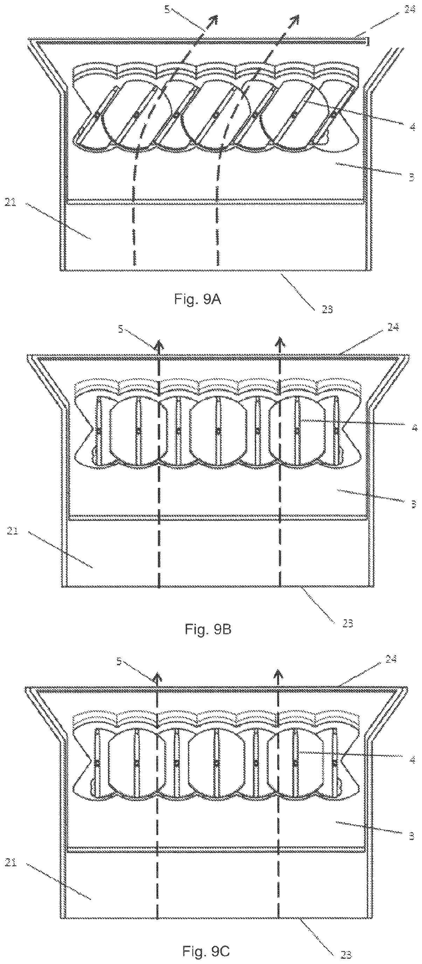

When the air outlet 1 blows air leftwards and rightwards, as shown in FIGURES 9A-9C, the air guide blade set 4 rotates leftwards and rightwards, and the air flow 5 is guided by the air guide blades to deflect leftwards and rightwards through the clearance between the housing and the air guide block 3, so that the leftward and rightward guided air flow blows out at the air outlet side 24 of the housing.

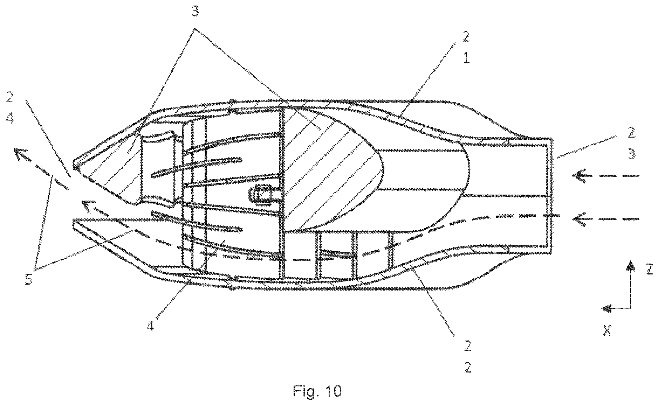

The left and right rotation of the air guide blade set 4 along the blade rotating shaft 42 and the upward and downward movement of the air guide block 3 do not interfere with each other, and guide the air flow leftwards and rightwards and upwards and downwards respectively. When the air outlet 1 blows air upwards and rightwards, as shown in FIGURE 10, the air guide block 3 is positioned at the upper part of the housing, and the air guide blade set 4 inclines rightwards, so that the air flow 5 is guided in an upper right direction at the inclination angle of the blades. The ribs 41 reduce the notch of the well 31 of the air guide block exposed to the air passage, smoothen the air passage inside the housing, effectively guides the air guide blade set 4 and reduces airflow noise.

### 2. Embodiment 2

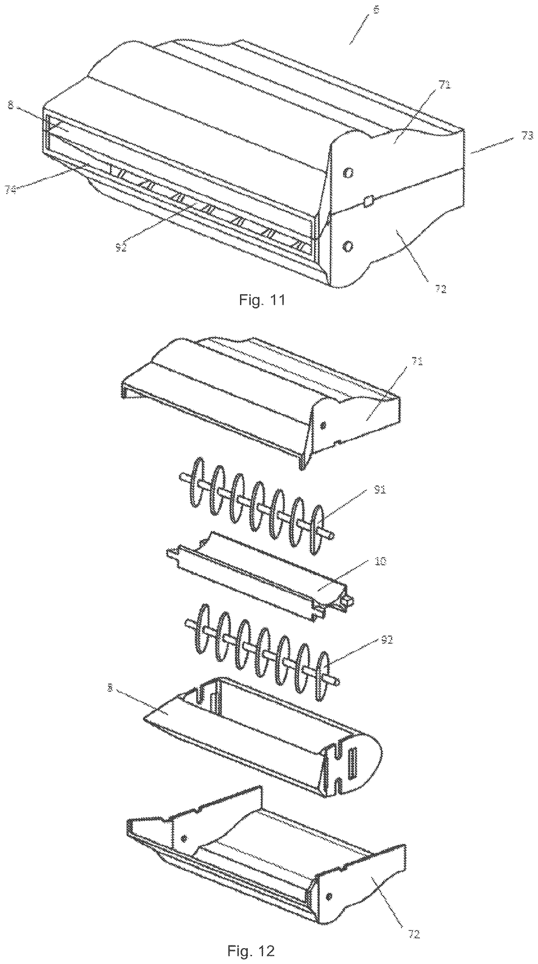

As shown in FIGURES 11-12, the air outlet 6 comprises an upper housing 71, a lower housing 72, an air guide block 8 and an air guide blade set 9. The air guide blade set 9 has a blade rotating shaft 93 extending in the horizontal direction, and the blade rotating shaft 93 extends to both sides of the upper housing 71 and the lower housing 72. The blade rotating shaft 93 is arranged on the side of the housing, so that a motor (not shown) is conveniently arranged on the side of the housing, and the space occupied in the height direction of the air outlet is reduced. After the upper housing 71 and the lower housing 72 are combined, slender rectangular notches are reserved on both sides, one side is an air inlet side 73, and the other side is an air outlet side 74.

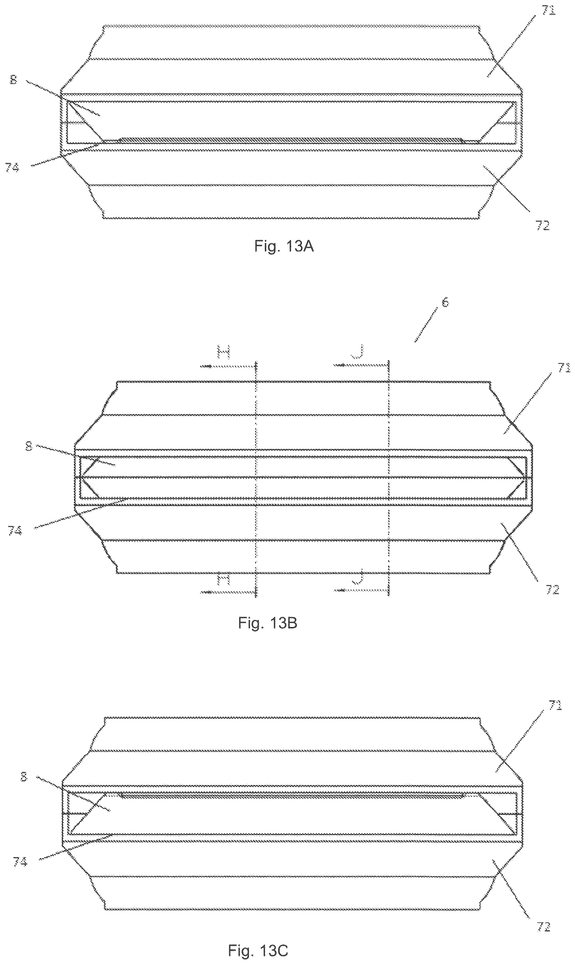

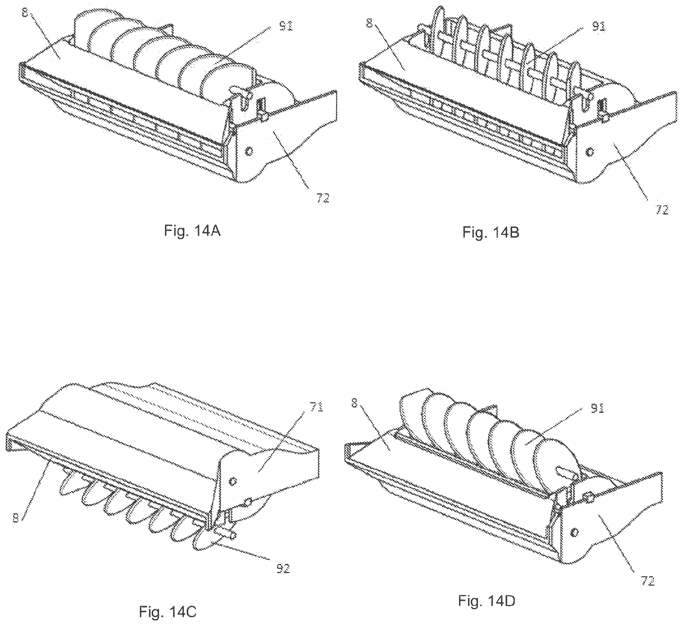

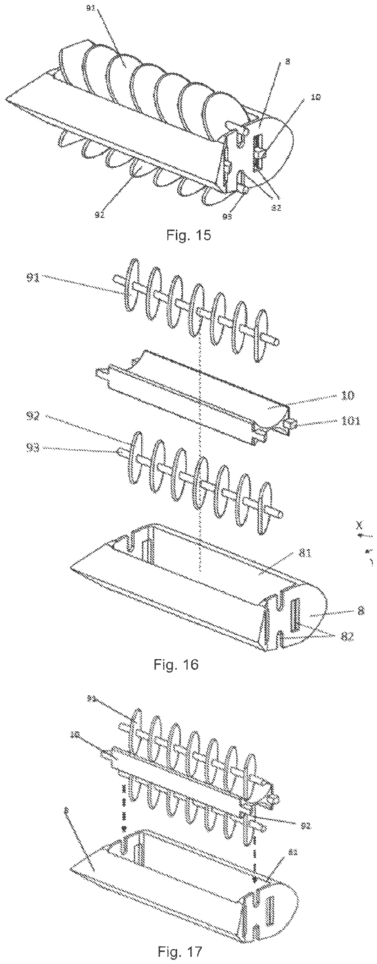

In contrast to Embodiment 1, as shown in FIGURES 15 to 17, the air guide blade set 9 of this embodiment is two air guide blade strings 91 and 92 including a plurality of blades obliquely arranged with respect to the rotating shaft 93. As shown in FIGURES 14A-14B, the air guide blade strings 91 and 92 rotate about the blade rotating shaft 93 to adjust the air blowing in the left and right directions of the air outlet. In this embodiment, the air guide block 8 has a well 81 extending in the longitudinal direction, and both sides of the air guide block 8 are provided with a U-shaped groove 82 in which the blade rotating shaft 93 is installed and a square groove 83. In addition, a partition plate 10 is arranged between the two air guide blade strings 91 and 92, a partition plate convex block 101 is arranged on the partition plate 10, and the partition plate convex block 101 is accommodated in the square groove 83, so that the air guide block 8 can move up and down relative to the air guide blade strings 91 and 92, as shown in FIGURES 13A-13C, 14C and 14D, the air blowing in the up and down directions of the air outlet can be adjusted.

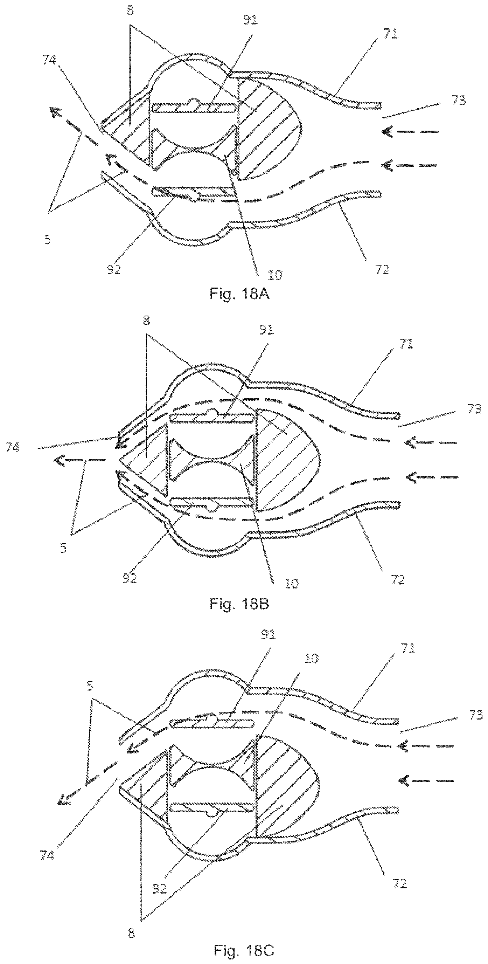

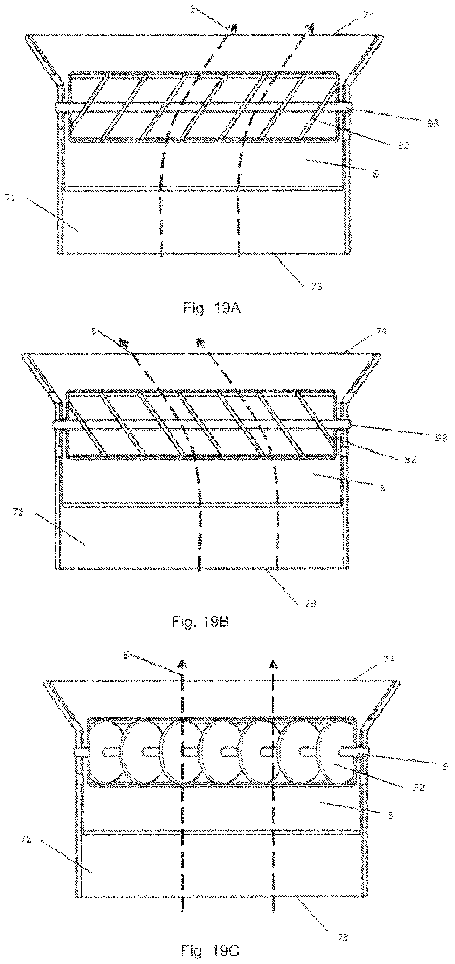

As shown in FIGURES 18A-18C and 19A-19C, as the blade strings 91 and 92 rotate about the rotating shaft 93, the blowing direction of the air outlet is rightward when the extending direction of the blades deviates rightwards relative to the direction perpendicular to the rotating shaft 93; when the extending direction of the blades deviates leftwards relative to the direction perpendicular to the rotating shaft 93, the blowing direction of the air outlet is leftward; and when the extending direction of the blades is parallel to the direction perpendicular to the rotating shaft 93, the blowing direction of the air outlet is towards the middle.

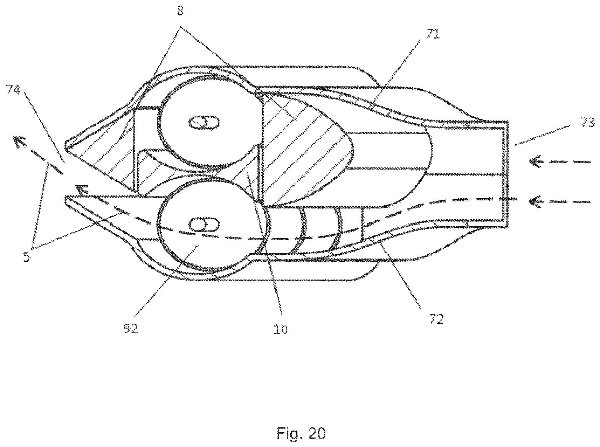

The rotation of the air guide blade strings 91 and 92 around the blade rotating shaft 93 and the upward and downward movement of the air guide block 8 do not interfere with each other, and guide the air flow leftwards and rightwards and upwards and downwards respectively. When the air outlet 1 blows air upwards and rightwards, as shown in FIGURE 20, the air guide block 8 is positioned at the upper portion of the housing, and the air guide blade strings 91 and 92 inclines rightwards, so that the air flow 5 is guided in an upper right direction at the inclination angle of the blades.

The above mentioned are only preferred embodiments of the present invention, and are not intended to limit the scope of the present invention. Various changes can be made to the above-mentioned embodiments of the present invention. That is to say, all simple and equivalent changes and modifications made in accordance with the claims of the present invention and the content of the description fall into the protection scope of claims of the patent for invention. The content without being described in detail in the invention is conventional technical content.

## Claims

1. An air outlet comprising a housing, wherein an air guide block is assembled inside the housing, the air guide block is provided with a well, and at least one set of air guide blades are accommodated in the well to enable the air guide block to longitudinally move relative to the air guide blades.

2. The air outlet according to Claim 1 wherein the air guide blade is provided with a blade rotating shaft extending in a vertical direction so that a single air guide blade rotates around the blade rotating shaft.

3. The air outlet according to Claim 1 wherein the air guide blade is provided with a plurality of sets of ribs with different heights, and the ribs on adjacent air guide blades are interleaved.

4. The air outlet according to Claim 3 wherein the profile of the rib substantially identical to the outer profile of the outer surface of the air guide block at the same side.

5. The air outlet according to Claim 3 wherein at least one set of ribs are substantially aligned with the upper or lower surfaces at periphery of an opening of the well with respect to each longitudinal position of the air guide block.

6. The air outlet according to Claim 1 wherein the opening side of the well comprises a plurality of continuous curved surfaces, two ends of the single curved surface corresponding to a limit rotation position of the single air guide blade.

7. The air outlet according to Claim 6 wherein the profile of the single curved surface is substantially identical to the rotation trajectory of the air guide blades.

8. The air outlet according to Claim 1 wherein the guide blades comprise two sets of air guide blade strings.

9. The air outlet according to Claim 8 wherein a blade rotating shaft extending in a horizontal direction is provided on the air guide blade, so that the air guide blade string rotates around the blade rotating shaft.
